# EUROPÄISCHE PATENTSCHRIFT

(11) **EP 0 397 901 B1**
(45) Veröffentlichungstag und Bekanntmachung des Hinweises auf die Patenterteilung: **25.08.1993**
(21) Anmeldenummer: 89108837.9
(22) Anmeldetag: 17.05.1989
(51) Int. Cl.: F16H 55/44, B21D 53/26

(54) **Verfahren zur Herstellung einer Riemenscheibe**
Method of manufacturing a belt pulley
Procédé de fabrication d'une poulie pour courroie

(43) Veröffentlichungstag der Anmeldung: 22.11.1990
(73) Patentinhaber: Leifeld GmbH & Co., D-59207 Ahlen (DE)
(72) Erfinder: Bichel, Joachim, Dipl.-Ing., D-5760 Arnsberg 2 (DE); Temmann, Robert, Dipl.-Ing., D-4715 Ascheberg (DE)
(74) Vertreter: Schulze Horn, Stefan, Dipl.-Ing. M.Sc.

(56) Entgegenhaltungen:
- EP-A- 0 156 178
- DE-A- 3 819 957
- FR-A- 2 507 931
- GB-A- 2 135 421
- US-A- 4 273 547

## Beschreibung

Die Erfindung betrifft ein Verfahren gemäß dem Oberbegriff des Patentanspruches 1.

Aus der DE-C-38 19 957 ist ein Verfahren der eingangs genannten Art bekannt. Bei diesem Verfahren wird der Randbereich der Metallronde nach einem Bordieren zu einem innen und außen glattflächigen hohlzylinderförmigen Körper flachgedrückt. In diesen flachen Körper werden dann zur Erzeugung einer Riemenscheibe in Umfangsrichtung oder quer dazu laufende Nuten eingearbeitet. Nachteilig besteht bei diesem Verfahren die Gefahr, daß die Materialverteilung des bordierten Randbereiches der Metallronde während des Flachdrückens nicht der gewünschten Materialverteilung des jeweiligen Endprofils entspricht, was zu Inhomogenitäten, z.B. durch Überwalzungen oder überlappungen, im Material führt. Hierdurch werden die Belastbarkeit und die Haltbarkeit der Riemenscheibe beträchtlich vermindert. Ein ähnliches Problem tritt auf bei der Einarbeitung der Nuten in den flachgedrückten Umfangsbereich, denn es besteht für das zur Ausbildung der Nuten seitwärts zu verdrängende Material kaum eine Ausweichmöglichkeit, so daß es auch hier leicht zu Überwalzungen kommen kann.

Ein weiteres Verfahren zur Herstellung von Riemenscheiben ist aus US-A-4 273 547 bekannt. Bei diesem Verfahren wird zunächst aus einer Metallronde durch Pressen ein topfförmiges Tiefziehteil gleichmäßiger Materialdicke erzeugt. Durch axiales "Kollapsen", d.h. axiales Zusammendrücken des Umfangsbereiches wird dessen Materialstärke vergrößert, wobei hierfür Unter- und Oberbacke eines Spannfutters stetig aufeinander zu bewegt werden. Erst daran anschließend erfolgt dann ein Flachdrücken und/oder Profilieren des Umfangsbereiches zur Riemenauflage. Dieses Verfahren erfordert also einen hohen Aufwand für seine Ausführung, da sehr unterschiedliche Vorgänge, nämlich Tiefpressen bzw. -ziehen, axiales Zusammendrücken , radiales Flachdrücken und Profilieren, erforderlich sind.

Es stellt sich daher die Aufgabe, ein Verfahren der eingangs genannten Art zu schaffen, mit welchem problemlos aus Metallronden Riemenscheiben hoher Qualität bei einem vergleichsweise geringen Aufwand für die Verfahrensausführung herstellbar sind.

Die Lösung dieser Aufgabe gelingt erfindungsgemäß durch ein Verfahren der eingangs genannten Art mit den im Kennzeichen des Patentanspruches 1 genannten Verfahrensschritten.

Vorteilhaft erfolgt bei dem neuen Verfahren die Bearbeitung der Metallronde so, daß der Kraftaufwand hierfür so gering wie nur möglich gehalten wird. Durch die im Verlauf des Verfahrens gezielt erzeugte Wellenform des Umfangsbereiches und dessen anschließendes besonderes, eine dem jeweils zu erzeugenden Endprodukt angepaßte Materialverteilung hervorrufendes weiteres Umformen werden Überwalzungen und überlappungen während der Umformschritte und gegebenenfalls bei der abschließenden Erzeugung der Profile vermieden und die aufzubringenden Kräfte und der maschinelle Aufwand für die technische Realisierung des Verfahrens werden niedrig gehalten. Es kann somit mittels des neuen Verfahrens eine qualitativ hochwertige Riemenscheibe kostengünstig hergestellt werden.

Vorteilhaft können alle Bearbeitungsschritte als radiale Drückvorgänge erfolgen, was den technischen Aufwand für die Durchführung des Verfahrens gering hält. Außerdem kann das Werkstück in einer einzigen Aufspannung von der Ronde bis zur fertigen Riemenscheibe umgeformt werden und überwalzungen sind praktisch ausgeschlossen.

Eine Weiterbildung des Verfahrens sieht vor, daß eine vorgeprägte Metallronde eingesetzt wird. Hierdurch wird die Stabilität der Riemenscheibe im Bereich ihrer Nabe verbessert.

Ein Ablaufbeispiel des erfindungsgemäßen Verfahrens wird im folgenden anhand einer Zeichnung erläutert. Die Figuren der Zeichnung zeigen:
- Figur 1: eine eingespannte flache Metallronde vor dem wellenförmigen Profilieren mit einer Umformrolle, im Teilquerschnitt.
- Figur 2: die Ronde aus Figur 1 nach dem wellenförmigen-Profilieren,
- Figur 3: die Ronde nach dem Verfahrensschritt zur Erzielung der optimalen Materialverteilung als Vorform für das einzubringende Endprofil und
- Figur 4: die Ronde nach dem Endprofilieren zu einer Poly-V-Riemenscheibe.

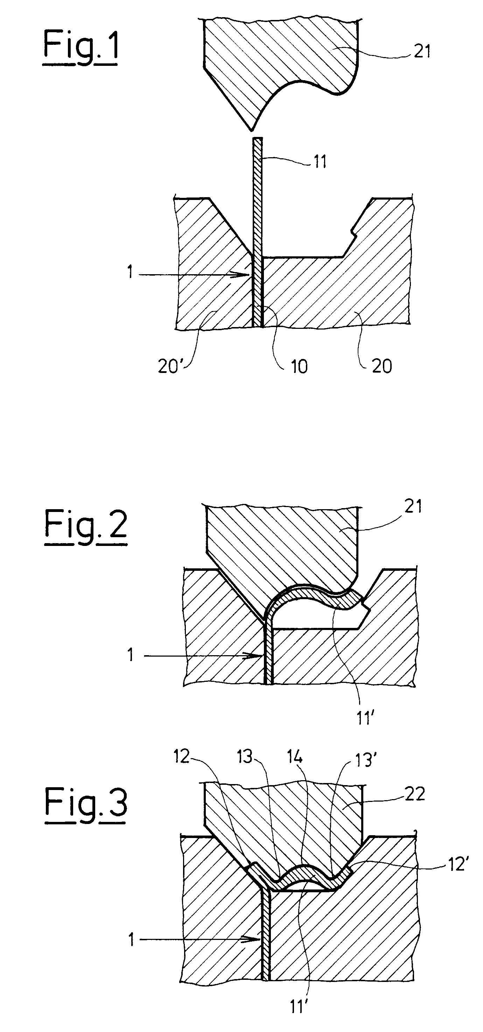

In den das Ablaufbeispiel des Verfahrens darstellenden Figuren 1 bis 4 sind in jeweils gleicher Darstellungsweise Teilbereiche einer Metallronde 1, einer Unter- und Oberbacke 20 und 20' eines Spannfutters sowie jeweils einer zur Umformung der Metallronde 1 dienenden Rolle 21 bis 23 gezeigt. Die Metallronde 1 ist dabei zwischen den aufeinandergepreßten Backen 20 und 20' des Spannfutters eingeklemmt und wird mit diesen um eine senkrecht zur Rondenebene verlaufende Achse gedreht. Die Rollen 21 bis 23 sind um eine parallele Achse drehbar sowie in der Ebene der Zeichnung in Radialrichtung bewegbar.

In der Figur 1 ist die Metallronde 1, die hier als flache Ronde mit einem zentralen Nabenteil 10 ausgebildet ist, in ihrem äußeren, Randbereich 11 noch unverformt. Eine erste Umformung des Randbereiches 11, nämlich ein wellenförmiges Profilieren wird mit Hilfe der Umformrolle 21 durchgeführt.

Figur 2 zeigt die Metallronde 1 am Ende des ersten Umformvorganges, durch welchen der Randbereich 11 zu einem Umfangsbereich 11' nach innen umgebogen und in eine geschwungene Form gebracht sowie zum äußeren Ende hin zunehmend verdickt wird.

Gemäß Figur 3 wird in einem weiteren Verfahrensschritt der Umfangsbereich 11' der Metallronde 1 mit einer zweiten Rolle 22 bearbeitet, wobei die Figur 3 bereits das Ergebnis dieses Verfahrensschrittes zeigt. Der Umfangsbereich 11' der Metallronde 1 weist nun eine im Querschnitte gesehene wellige Form mit randseitig je einem in Radialrichtung nach außen weisenden Wellenmaximum 12 bzw. 12' und seitlich nach innen je einem benachbarten Wellenminimum 13 bzw. 13' auf. Bei dem hier dargestellten Beispiel liegt zwischen den beiden Wellenminima 13 und 13' ein weiteres Wellenmaximum 14; selbstverständlich können hier auch mehr als ein Wellenmaximum 14 sowie entsprechend viele Wellenminima zusätzlich vorhanden sein. Diese Zahl hängt im wesentlichen von der gewünschten Breite der Riemenauflage der herzustellenden Riemenscheibe ab. Wesentlich ist bei diesem Verfahrensschritt auch die hiermit erreichte Materialverteilung im Umfangsbereich der Metallronde. Wie aus der Figur 3 ersichtlich ist, ist das Material im Bereich des zentralen Wellenmaximums 14 am dicksten und wird zu den seitlichen Maxima 12 und 12' hin dünner, wobei hier die Materialdicke aber immer noch größer ist als im Bereich der Nabe 10 der Metallronde 1.

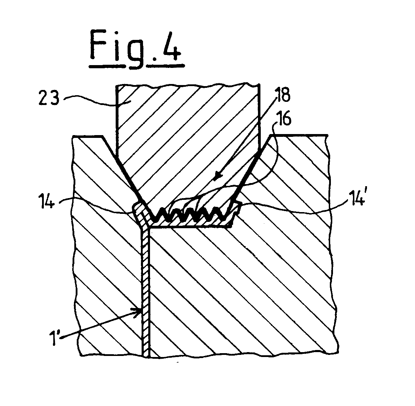

Der letzte Verfahrensschritt des hier erläuterten Ablaufbeispieles des Verfahrens besteht gemäß Figur 4 darin, den vorprofilierten Umfangsbereich 11' der Metallronde 1 aus Figur 3 mit in Umfangsrichtung umlaufenden V-Nuten 16 zu versehen. Hierzu dient im vorliegenden Beispiel eine Rolle 23, die hier die Funktion einer Endprofilierrolle hat. Der vorherige Umfangsbereich 11' wird damit zur fertigen Riemenauflage 18 umgeformt und aus der Metallronde 1 wird hier im letzten Verfahrensschritt eine fertige Poly-V-Riemenscheibe 1'.

## Patentansprüche

1. Verfahren zur Herstellung einer Riemenscheibe (1') aus einer zumindest in ihrem äußeren Randbereich (11) flachen Metallronde (1), wobei die Riemenscheibe (1') z.B. eine Poly-V-Keilriemenscheibe, Zahnriemenscheibe oder Flachriemenscheibe sein kann, mit einer Nahe (10) und einem in seiner Grundform hohlzylindrischen, außenseitig glatten oder balligen oder mit in Umfangs- oder Querrichtung verlaufendem Profil (16) versehenen Bereich (11), dessen Materialdicke größer sein kann als die der Nahe (10), wobei in dem Verfahren der Randbereich (11) der Metallronde (1) zu einem wellenförmig profilierten Umfangsbereich (11') umgeformt wird und in weiteren Verfahrensschritten das jeweilige Fertigprofil (16) erzeugt wird,
dadurch gekennzeichnet,
- daß der flache äußere Rand (11) der axial fest eingespannten Metallronde (1) durch eine sich radial an die Achse der Metallronde (1) annähernde Rolle (21) so in axiale Richtung umgelenkt wird, daß ein zylindrischer Umfangsbereich (11') mit wellenförmiger Profilierung und größerer Wandstärke im Vergleich zum Nabenbereich (10) der Metallronde (1) entsteht, wobei der so wellenförmig profilierte Umfangsbereich (11') an der einen Seite ein in Radialrichtung nach außen weisendes Wellenmaximum und ein seitlich nach innen benachbartes Wellenminimum und an der anderen Seite ein in den Nabenbereich (10) übergehendes Wellenminimum aufweist, und
- daß in einem zweiten Verfahrensschritt der wellenförmig profilierte Umfangsbereich (11') der Metallronde (1) so in eine im Querschnitt gesehen wellige Form mit endseitig je einem in Radialrichtung nach außen weisenden Wellenmaximum (12, 12') und seitlich nach innen benachbartem Wellenminimum (13, 13') gewalzt wird, daß eine wellenförmige Kontur mit optimaler Materialverteilung für die Weiterverarbeitung entsteht.

2. Verfahren nach Anspruch 1, dadurch gekennzeichnet, daß eine zur Stabilisierung des Nabenbereiches (10) vorgeprägte Metallronde (1) eingesetzt wird.

## Claims

1. Method for manufacturing a belt pulley (1') out of a metal round plate (1) which is flat at least in the outer edge area (11) thereof, wherein the belt pulley (1') may be e.g. a poly-V-belt pulley, toothed belt pulley or flat belt pulley, comprising a hub (10) and an area (11) which in the basic shape thereof is a hollow cylinder even at the outer side thereof or crowned or comprised with a profile (16) extending in circumferential or crosswise direction, wherein the material thickness of the area (11) may be larger than that of the hub (10), wherein in the method the edge area (11) of the metal round plate (1) is formed to a wave like contoured circumferential area (11') and in further steps of the method the respective finished profile (16) is produced,
**characterized in,**
that the flat outer edge (11) of the axially securely clamped metal round plate (1) is turned round in axial direction by a roller (21) approaching radially to the axis of the metal round plate (1) such, that a cylindrical circumferential area (11') with a wave like profile and a larger wall thickness as compared with the hub area (10) of the metal round plate (1) is created, wherein the wave like contoured circumferential area (11') at the one side thereof comprises a wave maximum pointing outwards in radial direction and a wave minimum adjacent inwards laterally and at the other side a wave minimum verging into the hub area (10), and that in a second step of the method the wave like contoured circumferential area (11') of the metal round plate (1) is rolled into a form waved in the cross section thereof with a wave maximum (12, 12') pointing outwards in radial direction at each end and a wave minimum (13, 13') adjacent inwards laterally such, that a wave like contour with an optimal material distribution for the subsequent production is created.

2. Method according to claim 1, characterized in that a metal round plate (1) pre-stamped for stabilizing the hub area (10) is used.

## Revendications

1. Procédé de fabrication d'une poulie pour courroie (1') à partir d'un flanc circulaire métallique (1), plat au moins dans sa zone de bordure extérieure (11), cette poulie (1') pouvant être par exemple une poulie pour courroie multigorges en V, une poulie pour courroie crantée ou une poulie pour courroie plate, munie d'une moyeu (10) et d'une zone (18), cylindrique creuse dans sa forme de base, et qui du côté extérieur est lisse ou arrondie ou munie d'un profil (16) s'étendant dans sa direction périphérique ou transversale, et dont l'épaisseur du matériau peut être supérieure à celle du moyeu (10), la zone périphérique (11') du flanc circulaire métallique (1) étant formée au cours du procédé en une zone périphérique à profil en forme d'onde (11') et le profil définitif correspondant (16) étant créé au cours des étapes du procédé qui suivent, caractérisé en ce que:
- le bord extérieur plat (11) du flanc métallique circulaire serré rigidement dans la direction axiale, est soumis par un rouleau (21) qui se rapproche radialement de l'axe du flanc circulaire métallique (1) à un déversement, dans la direction axiale de telle façon qu'il se forme une zone périphérique cylindrique (11') à profil en forme d'onde et à plus grande épaisseur de paroi que la zone de moyeu (10) du flanc circulaire métallique (1), cette zone périphérique à profil en forme d'onde (11') présentant d'un côté un sommet d'onde dans la direction radiale vers l'extérieur et un creux d'onde dans une zone se rapprochant de l'intérieur et de l'autre côté un creux d'onde en saillie par rapport à la zone de moyeu (10), et
- en ce qu'au cours d'une deuxième étape de procédé, la zone périphérique profilée en forme d'onde (11') du flanc circulaire métallique (1) est fluotournée ou roulée avec une forme d'onde qui, en coupe transversale, présente, à chaque extrémité, un sommet d'onde orienté radialement vers l'extérieur (12, 12') et des creux d'ondes (13, 13') dans la zone latérale contiguë vers l'intérieur, de manière à obtenir un contour en forme d'onde à répartition optimale du matériau pour l'usinage ultérieur.

2. Procédé selon la revendication 1, caractérisé en ce que l'on utilise un flanc circulaire métallique (1) préestampé pour stabiliser la zone de moyeu (10).
